# EUROPEAN PATENT APPLICATION

(11) **EP 3 255 389 A1**
(43) Date of publication of application: **13.12.2017**
(21) Application number: 16173394.4
(22) Date of filing: 07.06.2016
(51) Int. Cl.: G01F 1/28

(54) **FLOW RATE MEASUREMENT DEVICE AND METHOD FOR MEASURING A FLOW RATE**

(71) Applicant: Continental Automotive GmbH, 30165 Hannover (DE)
(72) Inventor: Hansen, Thomas-Tarp, 9500 Hobro (DK); Frederiksen, Finn, 9370 Hals (DK); Bertelsen, Brian Skjold, 9430 Vadum (DK)

(57) **Abstract**

Flow rate measurement device (1) for measuring a flow rate f of a medium flowing through a tube (2), wherein the flow rate measurement device (1) comprises at least at least one light source (3), at least one flexible light guide (4), a first end (5) of which is attached to an inside wall (7) of the tube (2) and connected to the at least one light source (3) in a way that light emitted by the at least one light source (3) can be guided from the first end (5) to a second end (6) of the at least one flexible light guide (4), and at least one light detector (8) for receiving the light emitted from the second end (6) of the at least one flexible light guide (4) and for outputting a detection signal s as a function of a received light intensity.

## Description

The invention relates to a flow rate measurement device and a method for measuring a flow rate of a medium flowing through a tube.

In various fields of technology liquids, gases and/or combination thereof flow through tubes. In many applications, knowledge of the amount of the medium flowing through the tube is either advantageous or even required. Various devices and gauges are known for measuring flow rates. Therein, different physical effects are exploited. For example, known measurement devices are based on mechanical, ultrasonic or electromagnetic effects. For example, a so called vane meter is based on the effect that a flow of a medium drives a vane within the tube.

A disadvantage of prior art flow rate measurement devices is that these may interact significantly with the medium flowing through the tube. Furthermore, movable parts of the measurement device may be fragile.

It is, therefore, on object of the present invention to overcome at least in part the disadvantages known from prior art and in particular to provide a robust flow rate measurement device and a method for measuring a flow rate of a medium flowing through a tube without significantly interacting with the medium.

These objects are solved at least in part by the features of the independent claims. The dependent claims are directed to preferred embodiments of the present invention.

The flow rate measurement device for measuring a flow rate f of a medium flowing through a tube comprises at least:
- at least one light source,
- at least one flexible light guide, a first end of which is attached to an inside wall of the tube and connected to the at least one light source in a way that light emitted by the at least one light source can be guided from the first end to a second end of the at least one flexible light guide, and
- at least one light detector for receiving the light emitted from the second end of the at least one flexible light guide and for outputting a detection signal s as a function of a received light

The flow rate measurement device may be used in the context of, for example, chemical industry, operation of internal combustion engines (such as engines for ships or cars) or in any other context, where a measurement of a flow rate of a medium flowing through a tube is supposed to be performed.

The flow rate f is defined to be the amount of the medium that passes a cross section of the tube per time. The amount of the medium therein can be defined, e.g., as the mass of the medium or as the volume of the medium. The medium can be any liquid, gas, pourable solid good or combination thereof. In particular, it is preferred that the medium is capable of flowing through the tube. That is, the medium preferably comprises solid components only to an extent that does not prevent the medium from being capable of flowing through the tube. Also, the medium preferably has a viscosity sufficient for flowing through the tube.

The at least one light source can be a lamp, a light emitting diode (LED), a laser, an arrangement for re-directing a beam of light generated elsewhere, in particular a mirror, or a similar device. Preferably, the at least one light source is capable of generating light of a sufficient intensity so as to allow a detection of this light with small errors. Preferably, the at least one light source emits a light spectrum that is adapted to potential requirements of the medium. For example, if the medium is sensitive to ultraviolet (UV) light (which might be the case, for example, for perishable food products), the at least one light source preferably does not emit UV light.

The at least one flexible light guide can be a thread, a cord, a plastic rot, a glass fiber, an optical fiber or a similar device, through which light can be guided. Preferably, the at least one flexible light guide is attached to the inside wall of the tube by gluing, welding, sticking, melting or a similar process. The at least one light source is preferably situated outside the tube, in particular preferably opposite the attachment point of the at least one flexible light guide. Preferably through a window, the light generated by the at least one light source can be transmitted into the first end of the at least one flexible light guide within the tube. From the first end, the light can proceed through the at least one flexible light guide to the second end of which. There, the light can be emitted.

The at least one light detector can be a photocell, a photomultiplier, a photo resistor, a CCD sensor, a photographic plate, or a similar device. The at least one light detector is preferably capable of detecting the light emitted by the second end of the at least on flexible light guide (i.e. the light originating from the at least one light source). That is, the at least one light detector is preferably particularly sensitive for the frequency spectrum emitted by the at least one light source. Further, it is preferred that the light can be detected by the at least one light detector in a way that the received signal exceeds a potential noise light sufficiently. It is preferred that the at least one light detector is situated outside the tube opposite of the at least one light source. Thereby, it is preferred that the second end of the at least one flexible light guide is spaced apart from the at least one light detector. Further, it is preferred that the at least one light detector is separated from the inside of the tube by a window, through which the light that is supposed to be detected can enter the at least one light detector. Due to the flexibility of the at least one flexible light guide the flexible light guide may be shifted by the flow rate f of the medium flowing through the tube. This changes the position where the light guided by the light guide impacts on the inside wall of the tube opposite to the light source. This also changes the intensity of the light which impacts on a particular position of the inside wall of the tube. The light detector can is arranged in such a manner that it is able to detect a change in intensity of the light and/or a change of a position where the light impacts on the inside wall of the tube. Thereby, it can be detected electronically in how far the at least one flexible light guide is bent. From this fact it can be concluded how fast and, optionally, in which direction the medium is flowing through the tube.

The detection signal s outputted by the at least one light detector is preferably an electric signal. The detection signal s is preferably processed in a microcontroller.

In a preferred embodiment of the flow rate measurement device the at least one flexible light guide is in a zero position if the flow rate f is zero. Therein, the zero position is defined by the at least one flexible light guide extending from the inside wall of the tube into the inside of the tube. The second end of the at least one flexible light guide is displaced by a displacement in a flow direction of the medium if the flow rate f is not equal to zero. The amount of the displacement is a function of the absolute value of the flow rate f. The direction of the displacement depends on the flow direction of the medium.

Preferably the flexible light guide is oriented perpendicular to the inside wall of the tube in its zero position. Preferably the light detector is arranged opposite to the light source at the inside wall of the tube. It is especially preferred that the light guide extends in a direct virtual connection line between the light source and the light detector in its zero position.

It is preferred that the at least one flexible light guide responds to a flow of the medium through the tube regardless of the direction of flow. That is, the displacement of the at least one flexible light guide is supposed to be the same for the same absolute value of the flow rate in either direction. This way, the flow rate can be detected with the same accuracy for both flow directions. Therefore, the zero position as defined according to this preferred embodiment is advantageous as it provides symmetry between both flow directions.

The light detector may be arranged to generate a signal in response to the intensity of the received light (first type of light detector). Due to a displacement of the light guide the intensity of light which impacts on the particular position of the inside wall of the tube (at which is light detector is placed) changes. Therefore the change in intensity of received light detected by the sensor enables to detect whether and in how far the light guide is displaced.

The light detector may also be arranged to detect a position where light impacts on the sensor (second type of light detector). In this case the light detector may also be an array of more than one light detectors, preferably a multiplicity of light detectors. In case of an array of light detectors each light detector of such an array may be arranged to detect whether an amount of light larger than a particular threshold value impacts on a sensor. This may enable to detect a particular position of the second end of the light guide and therefore this enables to detect a displacement of the light guide.
A combination of both types of light detectors are also possible. Such combinations may enable a particular precise measurement of the flow rate in combination with a detection of flow direction. Especially preferred is an array of two light detectors arranged in flow direction behind each other wherein both light detectors are able to detect intensity of the received light. In case of such an arrangement the difference in the intensity of light detected by both light detectors is used to determine the direction of flow. The absolute intensity of light detected by one or both of these light detectors is used to determine the flow rate.

In a further preferred embodiment of the flow rate measurement device the at least one flexible light guide is configured for maintaining the zero position by creating an elastic restoring force when being displaced from the zero position.

With no medium flowing through the tube, it is preferred that the at least one flexible light guide is maintained in the zero position. As the at least one flexible light guide in this embodiment is capable of generating the respectively required restoring force by itself, no external means for restoring this position are required. Preferably, the at least one flexible light guide is configured in terms of a spring that, without external influences, maintains its zero position. The elastic restoring force is preferably proportional to the displacement.

The elastic restoring force may be achieved by elastic fibers which also provide the light guiding ability of the light guide. It is also possible that the elastic restoring force is achieved by additional elastic elements (fibers, spring elements etc.) of the light guide.

The light guide causes a flow resistance in case of the medium flows around the light guide. The light guide may also comprise additional elements to provide a flow resistance for the medium. A flow resistance of the light guide for the medium is required for the displacing the light guide from its zero position by means of a flow rate of the medium. The displacement of the light guide at a certain flow rate is a result of an equilibrium between the flow resistance caused by the light guide and the restoring force generated by the light guide due to its displacement.

In a further preferred embodiment of the flow rate measurement device the detection signal s is a function of the displacement of the second end of the at least one flexible light guide.

As the detection signal s is processed preferably in the microcontroller and further preferably made accessible to a user, it is preferred that the detection signal s encodes the flow rate f (i.e. both the absolute value and the sign of the flow rate f).

In a further preferred embodiment of the flow rate measurement device the detection signal has a maximum value sₘₐₓ if the at least one flexible light guide is in the zero position.

Preferably, in this embodiment the at least one light source and the at least one light detector are arranged exactly opposite each other outside the tube. That way, light can be guided efficiently from the at least one light source through the at least one flexible light guide to the at least one light detector. The maximum intensity is detected by the at least one light detector if the at least one flexible light guide is in the zero position. Light can be directed through the at least one light guide in the zero position from the at least one light source to a center position of the at least one light detector, i.e. to the area of the at least one light detector which is most sensitive. That is, the maximum value sₘₐₓ of the detection signal s is detected if the at least one flexible light guide is in the zero position, i.e. if the flow rate is zero. In contrast, if the flow rate of the medium is different from zero, the at least one flexible light guide is bent and displaced accordingly. This way, the spot of maximal light intensity is displaced from the center of the at least one light detector. This corresponds to a lower light intensity being detected by the at least one light detector.

Alternatively, an embodiment of the flow rate measurement device is preferred, wherein the detection signal s has a maximum value sₘₐₓ if the second end of the at least one flexible light guide is displaced by a maximal displacement , and wherein the maximal displacement corresponds to a maximal flow rate fₘₐₓ detectable for the medium flowing.

In this embodiment, it is preferred that the at least one light source and the at least one light detector are arranged basically opposite each other outside the tube, with the at least one light detector displaced in the positive flow direction of the medium from the position exactly opposite the at least one light source. Thereby, the maximum intensity of the light emitted by the second end of the at least one flexible light guide coincides with the position of the at least one light detector in the case that the medium is flowing at the maximum flow rate fₘₐₓ.
In a further preferred embodiment of the flow rate measurement device the at least one flexible light guide comprises an optical fiber.

The optical fiber is preferably capable of guiding the light generated by the at least one light source almost without loss. Further, the optical fiber preferably does not interact significantly with the medium flowing through the tube. The term "interaction" in particular means chemical interaction, here. Such chemical interaction should not occur because it might influence the optical properties of the light guide.

In a further preferred embodiment of the flow rate measurement device the at least one light source comprises at least one light emitting diode (LED).

A light emitting diode (LED) can be operated without sophisticated electric circuitry. Moreover, an LED can be operated over a long period of time without requiring maintenance. Further, LEDs are available with various, in particular well-defined, light spectra. Such a well-defined light spectrum is preferred because influences of frequency depending effects can be either suppressed or at least taken into account accurately. This can increase the accuracy of the flow rate measurement device.

In a further preferred embodiment the flow rate measurement device comprises a microcontroller electronically connected via a connection line at least to the at least one light detector.

The microcontroller can be any electronic circuitry suitable for processing the detection signal s. This is preferably done in such a way that digital information about the flow rate f is obtained. Preferably, the absolute value and the sign (encoding the direction in which the medium flows) of the flow rate f are made accessible to a user, who uses the flow rate measurement device. The information can be shown, for example, on a display. Optionally, a signal transformer such as a signal amplifier can be introduced in the connection line.

The flow rate measurement device is particular suitable in case the medium is at least partially transparent.

A transparent medium has the advantage that light being emitted from the second end of the at least one flexible light guide can be detected by the at least one light detector without significant losses. As the second end of the at least one flexible light guide is preferably spaced apart from the at least one light detector, the light has to propagate through the medium at least partly. Any intransparencies of the medium can limit the obtainable accuracy of the flow rate measurement device.

It is furthermore advantageous in case the transparency of the medium is constant. An unforeseeable variation in transparency of the medium complicates the measurement with the flow measurement device since in case of a variation in transparency of the medium it is difficult to distinguish whether a change of the light detected by the light detector is caused by the variation of transparency or whether it is caused by a displacement of the light guide.

The flow rate measurement device is also particular suitable in case the medium comprises at least a liquid component.

Comprising at least a liquid component can mean that the medium is either completely liquid, comprises a liquid and a gaseous phase or comprises a liquid and/or gaseous phase, in which solid particles are conveyed. Also, combinations of the described possibilities are supposed to be included. Having a liquid component can facilitate the flow of the medium through the tube. In contrast to a purely gaseous medium, a medium comprising at least a liquid component is more likely to be capable of bending the at least one flexible light guide. This can increase the displacement of the second end of the at least one flexible light guide and, accordingly, increase the obtainable accuracy of the flow rate measurement.

According to a further aspect of the present invention a method is provided for measuring a flow rate f of a medium flowing through a tube using one of the described flow rate measurement devices.

The details and advantages disclosed for the flow rate measurement device according to the present invention can be applied to the method of the invention, and vice versa.

In a preferred embodiment the method further comprises calibrating the flow rate measurement device in a way that a calibration curve is obtained, and determining the flow rate f from the detection signal s using the calibration curve.

Preferably, the calibration curve comprises information for converting a certain value of the detection signal s into a corresponding certain value of the flow rate f. In case that the calibration curve is monotonic, the assignment of a value of the flow rate f to a value of the detection signal s is unambiguous. In case that the calibration curve is symmetric, in particular to the zero position (which corresponds to the flow rate being zero) with both branches of the calibration curve being monotonic, at least the assignment of an absolute value of the flow rate f to the detection signal s can be unambiguous.

Obtaining the calibration curve can be done experimentally, e.g. by additionally measuring the flow rate f with a second, previously calibrated flow rate measurement device.

The invention is preferably used in a delivery device for a selective catalyst reduction (SCR) installation comprising at least a tube for guiding urea, wherein a flow rate measurement device according to the present invention is included within the tube for measuring the flow rate f of the urea being the medium flowing through the tube, and wherein the flow rate measurement can be performed by one of the described methods.

Selective catalyst reduction installations with delivery devices are commonly used in automobiles for reducing pollutant substances in the exhaust gas. In particular, SCR systems are used to reduce nitrogen oxides (NO, NO₂). Therefore, urea is introduced into the exhaust gas system. Therein, it can be advantageous and/or even required, for example by law, to keep track of the amount of urea being introduced into the exhaust system. Furthermore, it is also advantageous to detect the amount of urea as this may provide indications of potential leakages within the system. In particular, an injector pressure line to the injector for injecting the urea into the exhaust gas system can be leaky, which can be detected from the amount of urea being introduced into the exhaust gas system. Therefore, it is preferred that a flow rate measurement device according to the present invention is provided in a delivery device. The urea is suitable for being a medium, in particular because it is liquid and transparent. Furthermore, it is preferred that the described method for measuring the flow rate f is applied.

It should be noted that the individual features specified in the claims may be combined with one another in any desired technological reasonable manner and form further embodiments of the invention. The specification, in particular in connection with the figures, explains the invention further and specifies particularly preferred embodiments of the invention. Particularly preferred variants of the invention and also the technical field will now be explained in more details on the basis of the enclosed figures. It should be noted that the exemplary embodiments shown in the figures are not intended to restrict the invention. The figures are schematic and may not be to scale. The figures display:
- Fig. 1:: a schematic view of the flow rate measurement device,
- Fig. 2:: an enlargement of the flexible light guide from fig. 1, and
- Fig. 3:: a calibration curve.

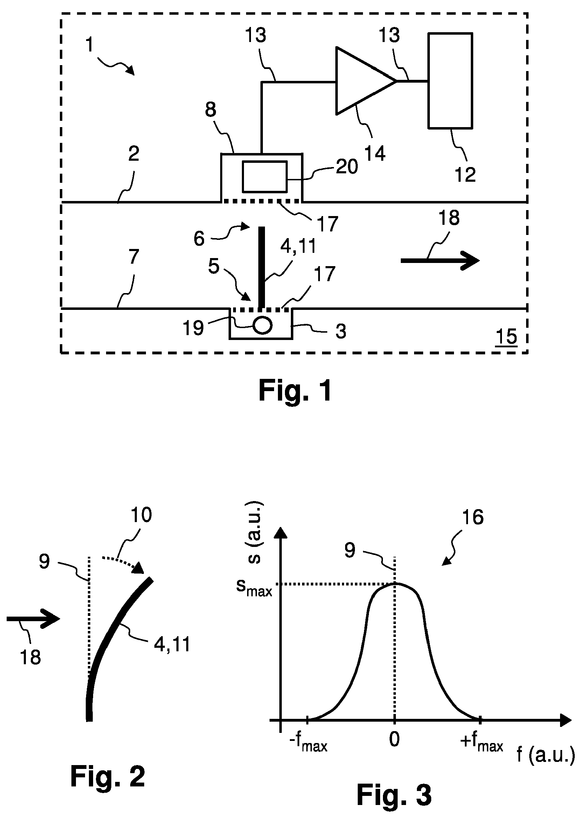

Fig. 1 shows a flow rate measurement device 1 for measuring a flow rate of a medium flowing through a tube 2. The flow rate measurement device 1 comprises a light source 3, which is arranged at the outside of the tube 2. A window 17 forming a part of an inside wall 7 of the tube 2 separates the light source 3 from the interior of the tube 2. Further, a flexible light guide 4, which is an optical fiber 11, is attached to the window 17 next to the light source 3. The light source 3 comprises a light emitting diode (LED) 19. Light generated by the light emitting diode (LED) 19 of the light source 3 can be guided through the window 17 into a first end 5 of the flexible light guide 4 towards a second end 6 of the flexible light guide 4. From there, it can propagate through the inside of the tube 2, where the medium can flow. The flow of the medium is indicated by an arrow representing a positive direction 18. Opposite to this positive direction 18, a negative direction is defined (not shown). On the opposite side of the light source 3 there is a light detector 8. The light detector 8 comprises a photocell 20. The light detector 8 is attached to the tube, where a window 17 separates the inside of the tube 2 from the light detector 8. Via the window 17, light emitted by the second end of the flexible light guide 4 can enter the light detector 8. From there, a detection signal s, which is an electrical signal, can be guided to a microcontroller 12 via a connection line 13, in which a signal transformer 14 is included. In this example embodiment, the flow rate measurement device 1 and the tube 2 are comprised within a delivery device 15 for a selective catalyst reduction (SCR) installation.

Fig. 2 shows the flexible light guide 4 of fig. 1. Also, the positive direction 18 is shown here again. If no medium is flowing through the tube 2, i.e. the flow rate f is zero, the flexible light guide 4 is in a zero position 9, which is indicated here in terms of a dotted line. If there is a medium flowing in the positive direction 18, the flexible light guide 4 is displaced by a displacement 10 in the positive direction 18.

Fig. 3 is plot a of a calibration curve 16 for the flow rate measurement device 1 from figure 1 and 2. The detection signal s is plotted as a function of the flow rate f. Both the detection signal s and the flow rate f are shown in arbitrary units, which are indicated by the abbreviation a.u. In this example, the calibration curve 16 is axisymmetric to the axis of the detection signal s, i.e. to zero flow rate f. To any value of the flow rate f between a minimum, which is -fₘₐₓ, and a maximum, which is +fₘₐₓ, a detection signal s value can be assigned. At zero flow rate f the detection signal s has its maximum value sₘₐₓ. This corresponds to the zero position 9 shown in figure 2.

## Claims

1. Flow rate measurement device (1) for measuring a flow rate f of a medium flowing through a tube (2), wherein the flow rate measurement device (1) comprises at least
- at least one light source (3),
- at least one flexible light guide (4), a first end (5) of which is attached to an inside wall (7) of the tube (2) and connected to the at least one light source (3) in a way that light emitted by the at least one light source (3) can be guided from the first end (5) to a second end (6) of the at least one flexible light guide (4), and
- at least one light detector (8) for receiving the light emitted from the second end (6) of the at least one flexible light guide (4) and for outputting a detection signal s as a function of a received light.

2. Flow rate measurement device (1) according to claim 1, wherein the at least one flexible light guide (4) is in a zero position (9) if the flow rate f is zero, wherein the zero position (9) is defined by the at least one flexible light guide (4) being extending from the inside wall (7) of the tube (2) into the inside of the tube (2), and wherein the second end (6) of the at least one flexible light guide (4) is displaced by a displacement (10) in a flow direction of the medium if the flow rate f is not equal to zero, wherein the amount of the displacement (10) is a function of the absolute value of the flow rate f, and wherein the direction of the displacement (10) depends on the flow direction of the medium.

3. Flow rate measurement device (1) according to claim 2, wherein the at least one flexible light guide (4) is configured for maintaining the zero position (9) by creating an elastic restoring force when being displaced from the zero position (9).

4. Flow rate measurement device (1) according to one of claims 2 or 3, wherein the detection signal s is a function of the displacement (10) of the second end (6) of the at least one flexible light guide (4).

5. Flow rate measurement device (1) according to one of claims 2 to 4, wherein the detection signal has a maximum value sₘₐₓ if the at least one flexible light guide (4) is in the zero position (9).

6. Flow rate measurement device (1) according to one of claims 2 to 4, wherein the detection signal s has a maximum value sₘₐₓ if the second end (6) of the at least one flexible light guide (4) is displaced by a maximal displacement, wherein the maximal displacement corresponds to a maximal flow rate fₘₐₓ detectable for the medium flowing.

7. Flow rate measurement device (1) according to one of the preceding claims, wherein the at least one flexible light guide (4) comprises an optical fiber (11).

8. Flow rate measurement device (1) according to one of the preceding claims, wherein the at least one light source (3) comprises at least one light emitting diode (19).

9. Flow rate measurement device (1) according to one of the preceding claims, further comprising a microcontroller (12) electronically connected via a signal transformer (14) at least to the at least one light detector (8).

10. Method for measuring a flow rate f of a medium flowing through a tube (2) using a flow rate measurement device (1) according to one of the claims 1 to 11.

11. Method according to claim 12, further comprising calibrating the flow rate measurement device (1) in a way that a calibration curve (16) is obtained, and determining the flow rate f from the detection signal s using the calibration curve (16).

12. Delivery device (15) for delivering urea for a selective catalyst reduction (SCR) installation comprising at least a tube (2) for guiding urea, wherein a flow rate measurement device (1) according to one of the claims 1 to 11 is included within the tube (2) for measuring a flow rate f of the urea being the medium flowing through the tube (2), and wherein the flow rate measurement can be performed by a method according to one of the claims 12 or 13.
